Europäisches Patentamt

European Patent Office

Office européen des brevets

(19)

(11) Veröffentlichungsnummer: **0 402 639 B1**

(12) **EUROPÄISCHE PATENTSCHRIFT**

(45) Veröffentlichungstag der Patentschrift: **10.11.93**

(51) Int. Cl.5: **C01B 33/34**, B01J 29/28

(21) Anmeldenummer: **90109102.5**

(22) Anmeldetag: **15.05.90**

(54) Verfahren zur Herstellung von kristallinen und zeolithischen Alumosilikaten.

(30) Priorität: **10.06.89 DE 3919098**

(43) Veröffentlichungstag der Anmeldung:
**19.12.90 Patentblatt 90/51**

(45) Bekanntmachung des Hinweises auf die
Patenterteilung:
**10.11.93 Patentblatt 93/45**

(84) Benannte Vertragsstaaten:
**AT BE CH DE DK ES FR GB GR IT LI LU NL SE**

(56) Entgegenhaltungen:
**EP-A- 0 150 256**

**P.A. JACOBS et al.: "Studies in Surface
Science and Catalysis", Band 33: "Synthesis
of high-silica aluminosilicate zeolites", 1987,
Seiten 113,134-146, Elsevier, Amsterdam, NL**

(73) Patentinhaber: **VAW Aluminium AG
Georg-von-Boeselager-Strasse 25
D-53117 Bonn(DE)**

(72) Erfinder: **Thome, Roland, Dr.
Brüsseler Strasse 58
D-5300 Bonn 1(DE)**
Erfinder: **Schmidt, Hubertus, Dr.
Hauptstrasse 75
D-5208 Eitorf(DE)**
Erfinder: **Tissler, Arno, Dr.
Adolfstrasse 100
D-5300 Bonn 1(DE)**
Erfinder: **Prescher, Dieter, Dr.
Libellenstrasse 2
D-8460 Schwandorf(DE)**

(74) Vertreter: **Müller-Wolff, Thomas, Dipl.-Ing.
VAW aluminium AG
Georg-von-Boeselager-Strasse 25
Postfach 2468
D-53014 Bonn (DE)**

Rank Xerox (UK) Business Services
(3.10/3.6/3.3.1)

**Beschreibung**

Die Erfindung betrifft ein Verfahren zur Herstellung von kristallinen, zeolithischen Alumosilikaten mit einem $SiO_2/Al_2O_3$-Molverhältnis von $\geq 20$ durch hydrothermale Kristallisation aus einem Reaktionsansatz, der in wäßrig-alkalischem Medium $SiO_2$ und $Al_2O_3$ bzw. deren hydratisierte Derivate oder Alkali-Silikate und -Aluminate, Mineralisatoren, Impfkeime und ggf. organische, strukturlenkende Ammoniumverbindungen enthält.

Bereits 1967 haben Argauer und Landolt (US-Patent 3.702.886) die noch heute gültigen Parameter für die Synthese von Pentasil-Zeolithen, insbesondere betreffend die folgenden Molverhältnisse, erarbeitet:

$$OH^-/SiO_2 \quad \text{mit } 0,07 - 10$$
$$SiO_2/Al_2O_3 \quad \text{"} \quad 5 \quad - 100$$
$$H_2O/SiO_2 \quad \text{"} \quad 1 \quad - 240$$

In diesen weit gesteckten Bereichen konnte die Synthese eines einigermaßen phasenreinem ZSM-5 jedoch nur durch Verwendung von organischen Aminen, wie z.B. Tetraproplylenammoniumverbindungen, mit sturkturgebender Funktion gelingen.

Die nachfolgenden Patentvorschläge und Veröffentlichungen befaßten sich vor allem damit, die sehr teuren, toxischen und leicht entflammbaren organischen Template, bei deren thermischer Zersetzung auch noch die Gefahr besteht, die Zeolithstruktur zu zerstören, zu substituieren bzw. ganz ohne Schablonenverbindungen bei der Synthese auszukommen. Weitere Modifizierungen zielten auf die Verbesserung der Reaktionsfähigkeit der $SiO_2$- und $Al_2O_3$-Ausgangsstoffe.

So ist aus der DE-OS 34 02 842 ein Verfahren der eingangs genannten Art bekannt, bei dem der wesentliche Gedanke darin besteht, daß man zur Beschleunigung der hydrothermalen Kristallisation ein speziell gealtertes aber noch röntgenamorphes Alumosilikat als Keimbildungsgel verwendet.

Aus der EP 0 111 748 sind Alumiosilikate mit Zeolithstruktur und Verfahren zu ihrer Herstellung bekannt, wobei die Umsetzung ohne Zusatz einer organischen Verbindung aber in Gegenwart von Aluminiumphosphat durchgeführt wird. Nach diesem Verfahren entstehen jedoch Zeolithe, die Phosphat enthalten (s.S.2, Z.32).

Die Zeolithsynthese ohne Verwendung organischer Verbindungen verläuft unter normalen Bedingungen sehr langsam, so daß es bis heute kein derartiges großtechnisches Verfahren zur Herstellung hochkieselsäurehaltiger Alumosilikate mit Pentasilstruktur gibt (s. Synthesis of High-Silica Aluminosilicate Zeolites, 1987, S. 143 und Zeolites as Catalysts, Sorbents and Detergent Builders, 1989, S. 654).

Es ist ferner bekannt, daß die Bildung der Alumosilikate, der Kristallgitteraufbau der Zeolithe aus $SiO_4$- und $AlO_4{}^-$-Tetraedern, die Keimbildung und das Kristallwachstum über reversible Reaktionen ablaufen. Diese Vorgänge hängen von chemischen Gleichgewichtszuständen ab, die je nach Temperatur, hydrothermalen Druckverhältnissen und Konzentrationen, d.h. Über- oder Untersättigung, kinetisch in verschiedene Richtungen laufen können. Gewünscht ist eine möglichst vollkommene Reaktion zu kristallinem Alumosilikat unter Vermeidung von möglichen Nebenphasen (z.B. Cristobalit) einerseits und der amorphen Phase andererseits.

Hohe Temperaturen, d.h. hohe Reaktionsgeschwindigkeiten, sind zwar für die Alumosilikat-Bildung sehr günstig, die Gefahr der Nebenphasen-Bildung ist jedoch auch sehr groß.

Aufgabe der vorliegenden Erfindung ist es daher, ein Verfahren zur Herstellung von kristallinen, zeolithischen Alumosilikaten mit einem $SiO_2/Al_2O_3$-Molverhältnis von $\geq 20$ durch hydrothermale Kristallisa-tion ohne die Verwendung von organischen Verbindungen zu entwickeln, das in einem großtechnischen Verfahren durchführbar ist und zu einem Produkt führt, das frei von kristallinen Nebenphasen ist.

Die Aufgabe wird durch die in den Ansprüchen angegebenen Merkmale gelöst. Es hat sich gezeigt, daß durch die zweistufige Verfahrensweise eine schnelle Kristallisation unter Vermeidung von kristallinen Nebenphasen ermöglicht wird. Insbesondere wird dies dadurch erreicht, daß im Reaktionsgemisch aus Wasserglas, Aluminiumsulfat, Natriumsulfat und Schwefelsäure bei turbulenter Strömung ein idealer Wärme- und Stoffübergang mit schnellem Stoffumsatz erfolgt und eine schnelle thermische Stabilisierung nach kurzer Verweilzeit durch eine schnelle Temperaturabsenkung ermöglicht wird, bei der die Bildung von Nebenphasen stark reduziert ist.

So wird das Reaktionsgemisch in ca. 1 Minute auf 250 - 325 °C aufgeheizt und nach einer Verweilzeit von 5 - 15 Minuten bei der maximal gewählten Temperatur in ca. 1 Minute auf < 245 °C abgekühlt. Bei diesen Temperaturen liegt der Druck zwischen 60 - 150 bar.

Die Funktionsweise des erfindungsgemäßen Verfahrens läßt sich wie folgt beschreiben:

Eine Suspension aus z.B. Wasserglas, Aluminiumsulfat, Natriumsulfat und Schwefelsäure mit folgenden Molverhältnissen:

| | |
|---|---|
| $SiO_2/Al_2O_3$ | = 20 - 60 |
| $OH^-/SiO_2$ | = 0,10 - 0,20 |
| $H_2O/SiO_2$ | = 20 - 60 |

wird von einem Vorlagebehälter einer Kolbenmembranpumpe zugeführt. Diese pumpt in ein Rohrsystem, bestehend aus mehreren Wärmetauschern (in der Regel 3- 4), die wärmetechnisch so ausgelegt sind, daß die vorgesehene Suspensionsmenge in ca. 1 Minute auf 300 °C aufgeheizt werden kann, hierzu kann Hochdruckdampf, Wärmeträgeröl oder -salz oder eine elektrische Beheizung installiert werden. An die Wärmetauscher schließt sich eine beliebig lange Verweilzeitstrecke an, die in der Regel eine Aufenthaltszeit bei maximal eingestellter Temperatur von 5 - 15 Minuten gewährleistet. Der Rohrdurchmesser wird so gewählt, daß bei den vorgegebenen Drücken in jedem Falle eine turbulente Strömung erhalten bleibt. Anschließend erfolgt die Kühlung des Reaktionsgemisches entweder durch Entspannung oder Wärmetausch auf die gewünschte Temperatur für die Kristallwachstumsphase, die im Bereich von 120 - 225 °C liegt. Um eine optimale Kristallinität zu erreichen, liegt die Verweilzeit im Temperaturbereich von 180 - 220 °C bei 5 - 10 Stunden. Bei diesen Kristallisationstemperaturen wird mit beheizbaren Verweilzeitautoklaven gearbeitet. Nach Beendigung der Kristallisation in den Verweilzeitautoklaven wird die Reaktionsmischung durch Entspannung oder Wärmetausch in 1 - 5 Minuten auf Temperaturen unterhalb von 95 °C abgekühlt. Durch Zugabe von Kristallisationskeimen können die Synthesezeiten weiter reduziert werden.

Im folgenden wird die Erfindung anhand mehrerer Ausführungsbeispiele näher erläutert.

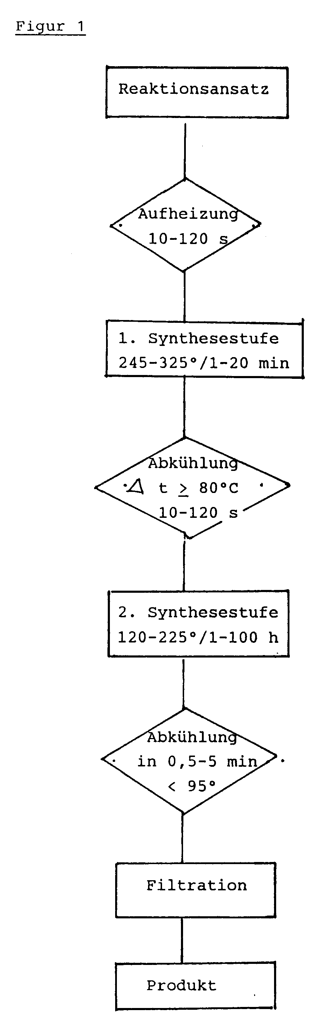

In der beiliegenden Figur 1 ist ein Fließbild des erfindungsgemaßen Verfahrens dargestellt.

## Beispiel 1

Ein Reaktionsansatz aus Lösungen von Na-Wasserglas, Aluminiumsulfat, Natriumsulfat und Schwefelsäure mit den Molverhältnissen

| | |
|---|---|
| $SiO_2/Al_2O_3$ | = 27 |
| $OH^-/SiO_2$ | = 0,14 |
| $H_2O/SiO_2$ | = 30 |

und einer Temperatur von 60 °C

wird kontinuierlich von einem Vorbehälter einer Kolbenpumpe zugeführt. In einem Rohrsystem aus 3 Wärmetauschern wird der Reaktionsansatz innerhalb von 1 Minute auf 270 °C aufgeheizt. Nach einer Verweildauer von 10 min bei dieser Temperatur in einer Verweilzeitstrecke wird die Reaktionsmischung auf 185 °C abgekühlt.

Danach wird die Reaktionsmischung in eine Verweilzeitautoklavenkaskade eingespeist, dort bei 185 °C mit einer durchschnittlichen Verweilzeit von 10 Stunden hydrothermal weiterbehandelt, in einem nachgeschalteten Autoklaven durch Entspannen und Wärmetausch auf ca. 60 °C abgekühlt, kontinuierlich abgezogen und filtriert.

Der Filterkuchen enthält einen Pentasil-Zeolith-Anteil von 60 % und außer amorphen Anteilen keine weiteren kristallinen Nebenphasen.

## Beispiel 2

Einem Reaktionsansatz aus Lösungen von Na-Wasserglas, Aluminiumsulfat, Natriumsulfat und Schwefelsäure mit den Molverhältnissen

| | |
|---|---|
| $SiO_2/Al_2O_3$ | $= 27$ |
| $OH^-/SiO_2$ | $= 0,14$ |
| $H_2O/SiO_2$ | $= 30$ |

und einer Temperatur von 60°C werden 2 % Keime (Produkt aus Beispiel 1) zugeführt. Diese Reaktionsmischung wird von einem Vorlagenbehälter einer Kolbenpumpe kontinuierlich zugeführt. In einem Rohrsystem aus 3 Wärmetauschern wird der Reaktionsansatz innerhalb von 1 Minute auf 270°C aufgeheizt. Nach einer Verweildauer von 10 min bei dieser Temperatur in einer Verweilzeitstrecke wird die Reaktionsmischung auf 185°C abgekühlt.

Danach wird die Reaktionsmischung in eine Verweilzeitautoklavenkaskade eingespeist, dort bei 185°C mit einer durchschnittlichen Verweilzeit von 10 Stunden hydrothermal weiterbehandelt, in einem nachgeschalteten Autoklaven durch Entspannen und Wärmetausch auf ca. 60°C abgekühlt, kontinuierlich abgezogen und filtriert.

Der Filterkuchen enthält einen Pentasil-Zeolith-Anteil von 95 % und außer amorphen Anteilen keine weiteren kristallinen Nebenphasen.

**Beispiel 3**

Ein Reaktionsansatz aus Lösungen von Na-Wasserglas, Aluminiumsulfat, Natriumsulfat und Schwefelsäure mit den Molverhältnissen

| | |
|---|---|
| $SiO_2/Al_2O_3$ | $= 40$ |
| $OH^-/SiO_2$ | $= 0,14$ |
| $H_2O/SiO_2$ | $= 40$ |

und einer Temperatur von 60°C wird kontinuierlich von einem Vorbehälter einer Kolbenpumpe zugeführt. In einem Rohrsystem aus 3 Wärmetauschern wird der Reaktionsansatz innerhalb von 1 Minute auf 270°C aufgeheizt. Nach einer Verweildauer von 10 min bei dieser Temperatur in einer Verweilzeitstrecke wird die Reaktionsmischung auf 185°C abgekühlt.

Danach wird die Reaktionsmischung in eine Verweilzeitautoklavenkaskade eingespeist, dort bei 185°C mit einer durchschnittlichen Verweilzeit von 10 Stunden hydrothermal weiterbehandelt, in einem nachgeschalteten Autoklaven durch Entspannen und Wärmetausch auf ca. 60°C abgekühlt, kontinuierlich abgezogen und filtriert.

Der Filterkuchen enthält einen Pentasil-Zeolith-Anteil von 50 % und außer amorphen Anteilen keine weiteren kristallinen Nebenphasen.

**Beispiel 4**

Einem Reaktionsansatz aus Lösungen von Na-Wasserglas, Aluminiumsulfat, Natriumsulfat und Schwefelsäure mit den Molverhältnissen

| | |
|---|---|
| $SiO_2/Al_2O_3$ | $= 40$ |
| $OH^-/SiO_2$ | $= 0,14$ |
| $H_2O/SiO_2$ | $= 40$ |

und einer Temperatur von 60°C werden 2 % Keime (Produkt aus Beispiel 3) zugeführt. Diese Reaktionsmischung wird von einem Vorlagenbehälter einer Kolbenpumpe kontinuierlich zugeführt. In einem Rohrsystem aus 3 Wärmetauschern wird der Reaktionsansatz innerhalb von 1 Minute auf 270°C aufgeheizt. Nach einer Verweildauer von 10 min bei dieser Temperatur in einer Verweilzeitstrecke wird die Reaktionsmischung auf 185°C abgekühlt.

Danach wird die Reaktionsmischung in eine Verweilzeitautoklavenkaskade eingespeist, dort bei 185°C mit einer durchschnittlichen Verweilzeit von 10 Stunden hydrothermal weiterbehandelt, in einem nachgeschalteten Autoklaven durch Entspannen und Wärmetausch auf ca. 60°C abgekühlt, kontinuierlich abgezogen und filtriert.

4

Der Filterkuchen enthält einen Pentasil-Zeolith-Anteil von 80 % und außer amorphen Anteilen keine weiteren kristallinen Nebenphasen.

**Patentansprüche**

1. Verfahren zur Herstellung von kristallinen zeolithischen Alumosilikaten mit einem $SiO_2/Al_2O_3$-Molverhältnis von ≧ 20 durch hydrothermale Kristallisation aus einem Reaktionsansatz, der in wäßrig-alkalischem Medium $SiO_2$ und $Al_2O_3$ bzw. deren hydratisierte Derivate oder Alkali-Silikate und -Aluminate, Mineralisatoren und Impfkeime enthält,
dadurch gekennzeichnet,
daß im Reaktionsansatz folgende Molverhältnisse vorliegen:

| | |
|---|---|
| $SiO_2/Al_2O_3$ | = 20 - 60 |
| $OH^-/SiO_2$ | = 0,10 - 0,20 |
| $H_2O/SiO_2$ | = 20 - 60 |

und die hydrothermale Kristallisation in zwei Stufen unter turbulenten Bedingungen erfolgt, wobei die erste Stufe den Temperaturbereich von 245 bis 325 °C bei 1 bis 20 Minuten und die zweite Stufe den Temperaturbereich von 120 bis 225 °C bei 1 bis 100 Stunden umfaßt.

2. Verfahren nach Anspruch 1, dadurch gekennzeichnet, daß die Molverhältnisse folgende Werte aufweisen:

| | |
|---|---|
| $SiO_2/Al_2O_3$ | = 25 - 40 |
| $OH^-/SiO_2$ | = 0,13 - 0,18 |
| $H_2O/SiO_2$ | = 25 - 40. |

3. Verfahren nach einem der vorhergehenden Ansprüche, dadurch gekennzeichnet, daß der Reaktionsansatz innerhalb von 10 bis 120 Sekunden auf die Temperatur der ersten Stufe aufgeheizt wird.

4. Verfahren nach einem der vorhergehenden Ansprüche, dadurch gekennzeichnet, daß der Reaktionsansatz nach Beendigung der ersten Synthesestufe in 10 bis 120 Sekunden um eine Temperatur ≧ 80 °C abgekühlt wird.

5. Verfahren nach einem der vorhergehenden Ansprüche, dadurch gekennzeichnet, daß die Reaktionsmischung nach Beendigung der Kristallisation auf eine Temperatur unterhalb von 95 °C in 0,5 bis 5 Minuten abgekühlt wird.

6. Verfahren nach einem der vorhergehenden Ansprüche, dadurch gekennzeichnet, daß die Temperaturen in der zweiten Synthese-Stufe 160 bis 200 °C betragen.

7. Verwendung der nach einem der vorhergehenden Ansprüche hergestellten hochkieselsäurehaltigen Alumosilikate mit Pentasil-Struktur als Entstickungs-Katalysatoren.

**Claims**

1. A process for the preparation of crystalline zeolitic aluminosilicates with a $SiO_2:Al_2O_3$ molar ratio of ≧20 by hydrothermal crystallisation from a reaction mix which contains $SiO_2$ and $Al_2O_3$ or their hydrated derivatives or alkali metal silicates and aluminates, mineralizers and seed crystals, in aqueous alkaline medium,
characterised in that
the following molar ratios are present in the reaction mix:

| SiO$_2$:Al$_2$O$_3$ | = 20 - 60 |
|---|---|
| OH$^-$:SiO$_2$ | = 0.10 - 0.20 |
| H$_2$O:SiO$_2$ | = 20 - 60 |

and hydrothermal crystallisation takes place in two stages under turbulent conditions, wherein the first stage spans the temperature range 245 to 325°C for 1 to 20 minutes and the second stage spans the temperature range from 120 to 225°C for 1 to 100 hours.

2. A process according to Claim 1, characterised in that the molar ratios have the following values:

| SiO$_2$:Al$_2$O$_3$ | = 25 - 40 |
|---|---|
| OH$^-$:SiO$_2$ | = 0.13 - 0.18 |
| H$_2$O:SiO$_2$ | = 25 - 40. |

3. A process according to one of the previous Claims, characterised in that the reaction mix is heated to the temperature for the first stage within 10 to 120 seconds.

4. A process according to one of the previous Claims, characterised in that the reaction mix is cooled by ≧80°C within 10 to 120 seconds after the end of the first synthesis stage.

5. A process according to one of the previous Claims, characterised in that the reaction mixture is cooled to a temperature below 95°C within 0.5 to 5 minutes, after the completion of crystallisation.

6. A process according to one of the previous Claims, characterised in that the temperatures in the second synthesis stage are 160 to 200°C.

7. Use of aluminosilicates with a pentasil structure and containing a high proportion of silica, prepared according to one of the previous Claims, as nitrogen removal catalysts.

**Revendications**

1. Procédé pour la préparation d'aluminosilicates zéolitiques cristallins ayant un rapport molaire SiO$_2$/Al$_2$O$_3$ ≧ 20 par cristallisation hydrothermale à partir d'une masse réactionnelle contenant du SiO$_2$ et du Al$_2$O$_3$ en milieu alcalin aqueux ou leurs dérivés hydratés ou des silicates et des aluminates d'alcali, des minéralisateurs et des germes d'ensemencement,
caractérisé en ce qu'il existe dans la masse réactionnelle les rappports molaires suivants:

| SiO$_2$/Al$_2$O$_3$ | = 20 - 60 |
|---|---|
| OH$^-$/SiO$_2$ | = 0,10 - 0,20 |
| H$_2$O/SiO$_2$ | = 20 - 60 |

et la cristallisation hydrothermale s'effectue en deux étapes dans des conditions turbulentes, la première étape comprenant l'intervalle de températures de 245 à 325°C pour 1 à 20 minutes et la deuxième étape comprenant l'intervalle de températures de 120 à 225°C pour 1 à 100 heures.

2. Procédé selon la revendication 1, caractérisé en ce que les rapports molaires présentent les valeurs suivantes:

| SiO$_2$/Al$_2$O$_3$ | = 25 - 40 |
|---|---|
| OH$^-$/SiO$_2$ | = 0,13 - 0,18 |
| H$_2$O/SiO$_2$ | = 25 - 40. |

3. Procédé selon l'une des revendications précédentes, caractérisé en ce que la masse réactionnelle est chauffée pendant 10 à 120 secondes à la température de la première étape.

4. Procédé selon l'une quelconque des revendications précédentes, caractérisé en ce que la masse réactionnelle est refroidie après l'achèvement de la première étape de synthèse en 10 à 120 secondes à une température $\geqq 80°C$.

5. Procédé selon l'une quelconque des revendications précédentes, caractérisé en ce que la masse réactionnelle est refroidie après l'achèvement de la cristallisation à une température inférieure à 95°C en 0,5 à 5 minutes.

6. Procédé selon l'une quelconque des revendications précédentes, caractérisé en ce que les températures dans la deuxième étape de synthèse s'élèvent entre 160 et 200°C.

7. Utilisation des aluminosilicates à haute teneur en acide silicique et à structure de Pentasil, préparés selon l'une quelconque des revendications précédentes, comme catalyseurs d'anti-adhésion.

Figur 1

```
         ┌─────────────────────┐
         │   Reaktionsansatz   │
         └─────────────────────┘
                    │
                  ◇ Aufheizung
                    10-120 s
                    │
         ┌─────────────────────┐
         │   1. Synthesestufe  │
         │  245-325°/1-20 min  │
         └─────────────────────┘
                    │
                  ◇ Abkühlung
                    Δ t ≥ 80°C
                    10-120 s
                    │
         ┌─────────────────────┐
         │   2. Synthesestufe  │
         │  120-225°/1-100 h   │
         └─────────────────────┘
                    │
                  ◇ Abkühlung
                    in 0,5-5 min
                    < 95°
                    │
         ┌─────────────────────┐
         │     Filtration      │
         └─────────────────────┘
                    │
         ┌─────────────────────┐
         │      Produkt        │
         └─────────────────────┘
```